# EUROPÄISCHE PATENTSCHRIFT

(11) **EP 2 661 336 B1**
(45) Veröffentlichungstag und Bekanntmachung des Hinweises auf die Patenterteilung: **15.08.2018**
(21) Anmeldenummer: 11788890.9
(22) Anmeldetag: 02.12.2011
(51) Int. Cl.: F16H 3/62, B25B 21/00, B25F 5/00, F16H 57/08, B25B 23/14

(54) **PLANETENGETRIEBE FÜR EINE WERKZEUGMASCHINE**
PLANETARY GEAR SYSTEM FOR A POWER TOOL
TRANSMISSION À TRAINS ÉPICYCLOÏDAUX POUR UNE MACHINE-OUTIL

(30) Priorität: 03.01.2011 DE 102011002406
(43) Veröffentlichungstag der Anmeldung: 13.11.2013
(73) Patentinhaber: Robert Bosch GmbH, 70442 Stuttgart (DE)
(72) Erfinder: DREWS, Oliver, 71111 Waldenbuch (DE); HEBER, Andreas, 73266 Bissingen An Der Teck (DE)
(86) Internationale Anmeldenummer: PCT/EP2011/071594
(87) Internationale Veröffentlichungsnummer: WO 2012/093010

(56) Entgegenhaltungen:
- EP-A1- 2 375 102
- EP-A2- 1 820 981
- DE-A1-102004 058 809
- DE-A1-102008 010 307
- US-A1- 2010 273 597

## Beschreibung

Die Erfindung bezieht sich auf ein Planetengetriebe für eine Werkzeugmaschine, insbesondere für eine elektrisch betriebene Handwerkzeugmaschine, nach dem Oberbegriff des Anspruches 1.

### Stand der Technik

Aus der DE 10 2004 058 809 A1 ist eine Handwerkzeugmaschine bekannt, die als Akku-Schrauber ausgeführt ist, dessen Werkzeugaufnahme zur Aufnahme eines Werkzeugs über einen elektrischen Antriebsmotor und ein dem Antriebsmotor nachgeschaltetes, mehrstufiges Planetengetriebe angetrieben wird.

Derartige Planetengetriebe können üblicherweise zwischen zwei verschiedenen Gangstufen umgeschaltet werden, wobei in der ersten Gangstufe eine langsame Umdrehungsgeschwindigkeit mit einem hohen Drehmoment und in der zweiten Gangstufe eine höhere Umdrehungsgeschwindigkeit mit einem geringeren Drehmoment erzeugt wird. Die Umschaltung erfolgt manuell mithilfe eines Schaltschiebers, der in Achsrichtung ein Schalthohlrad zwischen einer Rastposition und einer Außerrastposition verstellt.

Die hohen Motordrehzahlen werden über das Planetengetriebe in die Arbeitsdrehzahl der Werkzeugspindel untersetzt. Aus Effizienzgründen ist auf eine möglichst geringe Reibung in der Antriebseinrichtung mit dem Antriebsmotor und dem Planetengetriebe zu achten.

Aus der EP 2 375 102 A1 ist eine Getriebeeinheit für eine Stanzpresse bekannt, wobei die Getriebeeinheit Planetenräder aufweist, welche mittels Bolzen und Nadelkränzen drehbar gelagert sind.

### Offenbarung der Erfindung

Der Erfindung liegt die Aufgabe zugrunde, mit einfachen konstruktiven Maßnahmen ein Planetengetriebe, welches in einer Handwerkzeugmaschine eingesetzt wird, so auszubilden, dass Reibungsverluste minimiert sind.

Diese Aufgabe wird erfindungsgemäß mit den Merkmalen des Anspruches 1 gelöst. Die Unteransprüche geben zweckmäßige Weiterbildungen an.

Das Planetengetriebe der erfindungsgemäßen Handwerkzeugmaschine weist mehrere Getriebestufen auf, die jeweils rotierend gelagerte Planetenräder auf Planetenträgern umfassen. Die Planetenräder mindestens einer Getriebestufe sind über Wälzkörper auf einer Welle, die an dem zugeordneten Planetenträger gehalten ist, gelagert. Über die Wälzkörper ist sichergestellt, dass die Planetenräder der betreffenden Stufe auch unter Last mit reduzierter Reibung umlaufen, so dass die Reibungsverluste minimiert, die reibungsbedingte Wärmeerzeugung herabgesetzt und der Wirkungsgrad gesteigert ist.

Zumindest die Planetenräder einer Getriebestufe, der ein bewegliches Hohlrad zugeordnet ist, sind über Wälzkörper auf je einer Welle gelagert. Das verstellbare Hohlrad zweckmäßigerweise Teil einer Drehmomentkupplung oder einer Gangschaltung.

Grundsätzlich möglich ist es aber auch, die Planetenräder mehrerer Getriebestufen bzw. sämtlicher Getriebestufen über Wälzkörper zu lagern. Innerhalb einer Getriebestufe sind alle Planetenräder über Wälzkörper gelagert.

Gemäß einer weiteren zweckmäßigen Ausführung sind die Wälzkörper als Nadelhülsen ausgebildet, die jeweils auf der Welle aufsitzen, die Träger des betreffenden Planetenrades ist.

Gemäß noch einer weiteren, vorteilhaften Ausführung sind insgesamt drei Getriebestufen vorgesehen, wobei die Planetenräder jeder Getriebestufe vorteilhaft in der vorbeschriebenen Weise über Wälzkörper gelagert sind.

Das Planetengetriebe ist zweckmäßigerweise zur Einstellung von mindestens zwei verschiedenen Gangstufen schaltbar ausgebildet. Das Schalten zwischen den beiden Gängen erfolgt durch axiales Verschieben eines Schalthohlrades, das zwischen einer Rastposition und einer Außerrastposition verstellbar ist. In der Rastposition ist das Schalthohlrad gehäusefest gekoppelt, in der Außerrastposition mit einem Planetenträger einer Getriebestufe gekoppelt, vorzugsweise der zweiten Getriebestufe. Zumindest die Planeten an diesem Planetenträger sind über die Wälzkörper an den Wellen gelagert, wobei das Schalten unter Last durch die erfindungsgemäße Ausführung verbessert bzw. erleichtert ist.

Gemäß noch einer weiteren vorteilhaften Ausführung ist ein Hohlrad des Planetengetriebes, vorzugsweise das Hohlrad dritter Stufe, welches der Werkzeugspindel benachbart ist, Teil einer Drehmomentkupplung zur Einstellung eines maximal übertragbaren Drehmoments. Das Hohlrad dieser Stufe ist rotatorisch zum Gehäuse beweglich. Auch die Planetenräder dieser Getriebestufe sind zweckmäßigerweise über Wälzkörper gelagert.

Das Schalthohlrad, über das die verschiedenen Gangstufen im Getriebe eingestellt werden, ist vorteilhafterweise mit einem Schaltschieber gekoppelt, der außen am Gehäuse angeordnet ist und von der Bedienperson verstellt werden kann. Zwischen dem Schaltschieber und dem Schalthohlrad befindet sich vorteilhafterweise ein Federelement, um über die federnden Eigenschaften Kopplungsvorgänge nicht schlagartig, sondern mit einer definierten Nachgiebigkeit durchzuführen.

Insgesamt weist die erfindungsgemäße Ausführung des Planetengetriebes für eine Werkzeugmaschine den Vorteil auf, dass das Getriebe unter Last geschaltet werden kann, die Wärmeerzeugung und Last herabgesetzt und außerdem der Einfluss von Fertigungstoleranzen auf Getriebefunktionen reduziert ist. Zumindest die Planetenräder einer Getriebestufe, vorzugsweise der schaltbaren Getriebestufe, deren Hohlrad zum Einstellen der verschiedenen Gangstufen entweder axial oder rotatorisch bewegbar ist, sind auf Wälzkörpern gelagert. Diese Wälzkörper sind vorteilhafterweise nadelförmig und auf Wellen aufgeschoben, die an dem Planetenträger der betreffenden Getriebestufe angeordnet sind. Zusätzlich oder alternativ zu der Getriebestufe, welche die Gangschaltung übernimmt, können auch die Planeten einer Getriebestufe auf Wälzkörpern gelagert sein, die Teil einer Drehmomentkupplung ist.

Die Wärmeentwicklung ist sowohl im Leerlauf als auch unter Last reduziert. Der Verschiebewiderstand bei Schaltvorgängen zum Umschalten zwischen den Gangstufen ist herabgesetzt, außerdem ist die Varianz von Kupplungsauslösemomenten reduziert.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt in Längsrichtung durch eine Handwerkzeugmaschine im Bereich eines schaltbaren Planetengetriebes mit drei Getriebestufen, wobei zum Schalten zwischen zwei Gängen ein Schalthohlrad axial zu verstellen ist,
- Fig. 2: in Explosionsdarstellung die Bauteile der schaltbaren Getriebestufe.

In den Figuren sind gleiche Bauteile mit gleichen Bezugszeichen versehen.

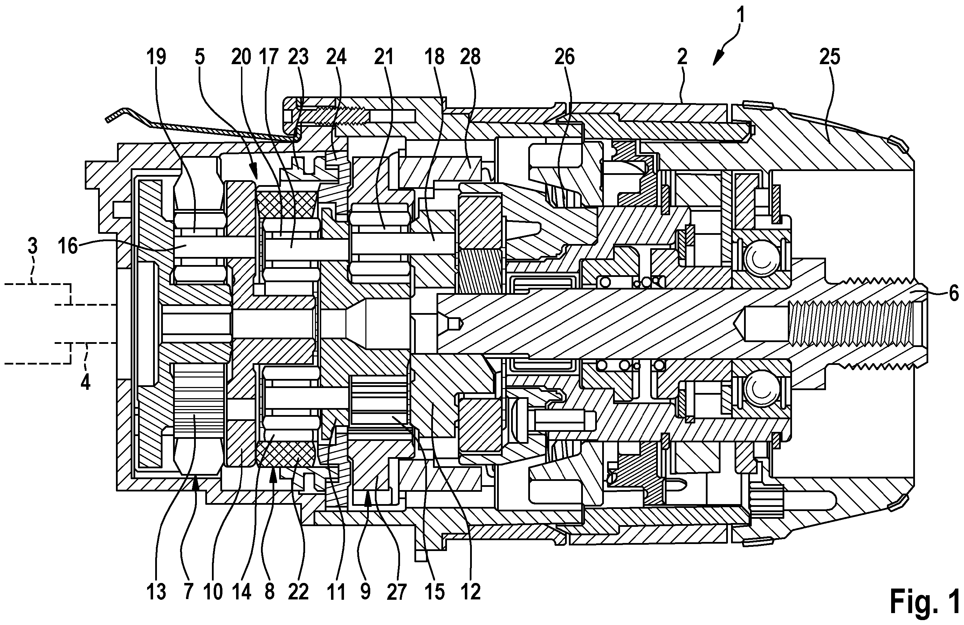

Bei der in Fig. 1 dargestellten Handwerkzeugmaschine 1 handelt es sich beispielsweise um einen Akku-Schrauber bzw. Akku-Bohrer. Die Handwerkzeugmaschine 1 weist in einem Gehäuse 2 einen andeutungsweise dargestellten elektrischen Antriebsmotor 3 mit einer Motorwelle 4, die ein Planetengetriebe 5 im Gehäuse 2 antreibt. Das Planetengetriebe 5 ist ausgangsseitig mit einer Drehspindel 6 gekoppelt und treibt diese an. Die Drehspindel 6 ist mit einer Werkzeugaufnahme zur Aufnahme eines Werkzeugs versehen.

Das Planetengetriebe 5 ist dreistufig ausgeführt und umfasst drei Getriebestufen 7, 8, 9, die einen Planetenträger 10 erster Stufe mit Planetenrädern 13, einen Planetenträger 11 zweiter Stufe mit Planetenrädern 14 und einen Planetenträger 12 dritter Stufe mit Planetenrädern 15 umfassen. Sämtliche Planetenräder 13, 14, 15 der ersten, zweiten bzw. dritten Getriebestufe sind auf Wellen 16, 17, 18 der jeweiligen Planetenträger 10, 11 bzw. 12 drehbar gelagert. Die Lagerung der Planetenräder 13, 14, 15 an den jeweiligen Wellen 16, 17, 18 erfolgt jeweils über Wälzkörper 19, 20, 21, wodurch die Reibung signifikant reduziert wird. Die Wälzkörper 19, 20, 21 sind beispielsweise als Nadelhülsen ausgebildet.

Das Planetengetriebe 5 kann zwischen einem ersten Gang mit langsamerer Umdrehungsgeschwindigkeit, jedoch höherem Drehmoment und einem zweiten Gang mit höherer Umdrehungsgeschwindigkeit, jedoch geringerem Drehmoment umgeschaltet werden. Die Änderung des Schaltzustandes erfolgt mithilfe eines Schalthohlrades 23, welches der zweiten Getriebestufe 8 zugeordnet ist. Das Schalthohlrad 23 umgreift ein Hohlrad 22 zweiter Stufe und ist axial zwischen einer Rastposition, in der das Schalthohlrad 23 mit einem gehäuseseitigen Rastring 24 verrastet ist und einer Außerrastposition zu verstellen, in der das Schalthohlrad 23 mit dem Hohlrad 22 zweiter Stufe und dem Planetenträger 10 1. Stufe verbunden ist und gemeinsam mit diesen umläuft. In der Rastposition, in welcher das Schalthohlrad 23 arretiert ist, ist die zweite Getriebestufe aktiviert, diese Position entspricht dem ersten Gang der Handwerkzeugmaschine mit langsamer Umdrehungsgeschwindigkeit. In der Außerrastposition, in der das Schalthohlrad 23 mit dem Hohlrad 22 der 2. Stufe und dem Planetenträger 10 der 1. Stufe verbunden ist, ist die zweite Getriebestufe stillgelegt, diese Position entspricht dem zweiten Gang der Maschine mit hoher Umdrehungsgeschwindigkeit.

In einer alternativen Ausführung ist das Hohlrad 22 zweiter Stufe zugleich als Schalthohlrad ausgeführt, das zwischen einer gehäusefesten Rastposition und einer Außerrastposition zu verstellen ist.

Die Stellbewegung zum Verstellen des Schalthohlrads 23 wird über einen an der Außenseite des Gehäuses angeordneten Schaltschieber durchgeführt, der über ein Federelement mit dem Schalthohlrad 23 verbunden ist.

Über die dritte Getriebestufe 9 ist eine Drehmomentkupplung zur Einstellung eines maximal übertragbaren Drehmoments realisiert. Hierzu können über einen Einstellring 25 im vorderen Bereich der Handwerkzeugmaschine verschiedene Drehmomente eingestellt werden. Über den Einstellring 25 ist die Vorspannung von Druckfedern 26 veränderbar, wobei bei geringerer Federvorspannung die Drehmomentkupplung früher gelöst wird, indem ein Hohlrad 27 der dritten Getriebestufe 9 an einer Rastscheibe 28 überrastet, die mit der Vorspannung der Druckfedern 26 beaufschlagt wird.

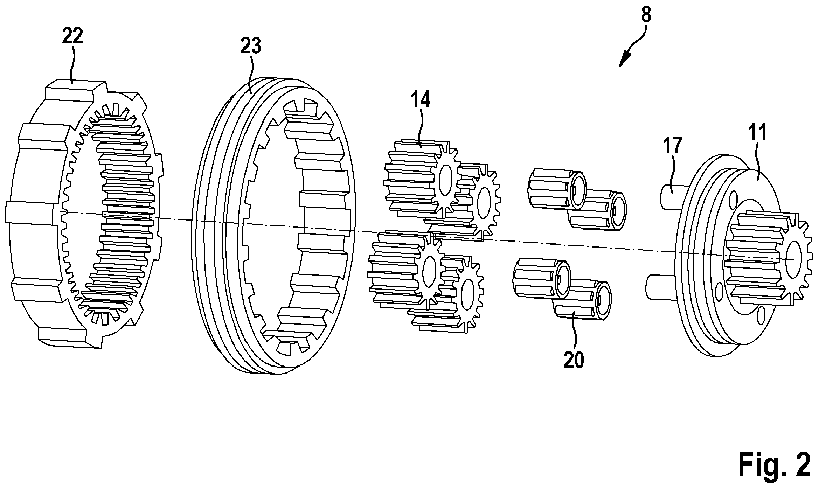

In Fig. 2 sind die verschiedenen Bauteile der zweiten Getriebestufe 8 in Explosionsdarstellung gezeigt. Die Bauteile umfassen das Hohlrad 22 zweiter Stufe, das axial verstellbar angeordnete Schalthohlrad 23 sowie die Planetenräder 14 auf dem Planetenträger 11 zweiter Stufe. Für eine reibungsarme Lagerung sind die Planetenräder 14 über als Nadelhülsen ausgeführte Wälzkörper 20 an Wellen 17 am Planetenträger 11 gelagert. Über den Umfang verteilt sind mehrere Planetenräder 14 am Planetenträger 11 gelagert.

## Patentansprüche

1. Handwerkzeugmaschine mit einem Planetengetriebe (5) mit mehreren Getriebestufen (7, 8, 9), wobei zumindest eine Getriebestufe (8, 9) ein zum Gehäuse (2) bewegliches Hohlrad (23, 27) aufweist, **dadurch gekennzeichnet, dass** die Getriebestufe (8, 9) Planetenräder (14, 15) besitzt, die über Wälzkörper (20, 21) auf jeweils einer Welle (17, 18) gelagert sind, wobei die Wellen (17, 18) an zugeordneten Planetenträgern (11,12) gehalten sind.

2. Handwerkzeugmaschine nach Anspruch 1, **dadurch gekennzeichnet, dass** die Planetenräder (13, 14, 15) sämtlicher Getriebestufen (7, 8, 9) über Wälzkörper (19, 20, 21) auf Wellen (16, 17, 18), die an zugeordneten Planetenträgern (10, 11, 12) gehalten sind, gelagert sind.

3. Handwerkzeugmaschine nach Anspruch 1 oder 2, **dadurch gekennzeichnet, dass** insgesamt drei Getriebestufen (7, 8, 9) vorgesehen sind.

4. Handwerkzeugmaschine nach einem der Ansprüche 1 bis 3, **dadurch gekennzeichnet, dass** die Wälzkörper (19, 20, 21) als Nadelhülsen ausgebildet sind.

5. Handwerkzeugmaschine nach einem der Ansprüche 1 bis 4, **dadurch gekennzeichnet, dass** das Hohlrad (27) einer Getriebestufe (9), deren Planetenräder (15) wälzgelagert sind, Teil einer Drehmomentkupplung zur Einstellung eines maximal übertragbaren Drehmoments ist.

6. Handwerkzeugmaschine nach Anspruch 5, **dadurch gekennzeichnet, dass** das Hohlrad (27) rotatorisch zum Gehäuse (2) beweglich ist.

7. Handwerkzeugmaschine nach einem der Ansprüche 1 bis 6, **dadurch gekennzeichnet, dass** das Planetengetriebe (5) zur Einstellung von mindestens zwei verschiedenen Gängen schaltbar ausgebildet ist.

8. Handwerkzeugmaschine nach Anspruch 7, **dadurch gekennzeichnet, dass** ein Schalthohlrad (23) vorgesehen ist, das zwischen einer Rastposition und einer Außerrastposition verstellbar ist, wobei das Schalthohlrad (23) in der Rastposition gehäusefest gekoppelt und in der Außerrastposition mit einem Planetenträger (11) der benachbarten Stufe gekoppelt ist.

9. Handwerkzeugmaschine nach Anspruch 8, **dadurch gekennzeichnet, dass** das Schalthohlrad (23) über ein Federelement mit einem Schaltschieber gekoppelt ist.

10. Handwerkzeugmaschine nach Anspruch 8 oder 9, **dadurch gekennzeichnet, dass** das Schalthohlrad (23) axial verstellbar ist.

11. Handwerkzeugmaschine nach einem der Ansprüche 8 bis 10, **dadurch gekennzeichnet, dass** das Schalthohlrad (23) der zweiten Getriebestufe (8) zugeordnet ist.

12. Handwerkzeugmaschine nach einem der Ansprüche 8 bis 11, **dadurch gekennzeichnet, dass** das Schalthohlrad (23) ein Hohlrad (22) der zweiten Getriebestufe (8) umgreift und axial zwischen einer Rastposition, in der das Schalthohlrad (23) mit einem gehäuseseitigen Rastring (24) verrastet ist, und einer Außerrastposition zu verstellen ist, in der das Schalthohlrad (23) mit dem Hohlrad (22) der zweiten Getriebestufe (8) und dem Planetenträger (10) der ersten Getriebestufe (7) verbunden ist.

13. Handwerkzeugmaschine nach einem der vorhergehenden Ansprüche, **dadurch gekennzeichnet, dass** die zweite Getriebestufe (8) ein Hohlrad (22), ein axial verstellbar angeordnetes Schalthohlrad (23) sowie Planetenräder (14) aufweist, welche über als Nadelhülsen ausgeführte Wälzkörper (20) auf den Wellen (17) des Planetenträgers (11) der zweiten Getriebestufe (8) gelagert sind.

14. Handwerkzeugmaschine nach einem der Ansprüche 8 bis 11, **dadurch gekennzeichnet, dass** das Hohlrad (22) der zweiten Getriebestufe (8) als Schalthohlrad ausgeführt ist, das zwischen einer gehäusefesten Rastposition und einer Außerrastposition zu verstellen ist.

15. Handwerkzeugmaschine nach einem der Ansprüche 5 bis 14, **dadurch gekennzeichnet, dass** die Drehmomentkupplung einen Einstellring (25) und Druckfedern (26) umfasst, wobei über den Einstellring (25) die Vorspannung der Druckfedern (26) veränderbar ist.

## Claims

1. Hand-held power tool with a planetary gear system (5) having a plurality of gear stages (7, 8, 9), wherein at least one gear stage (8, 9) has a ring gear (23, 27) movable to the housing (2), **characterized in that** the gear stage (8, 9) has planetary wheels (14, 15) which are mounted on a respective shaft (17, 18) via roller bodies (20, 21), wherein the shafts (17, 18) are held on associated planet carriers (11, 12).

2. Hand-held power tool according to Claim 1, **characterized in that** the planetary wheels (13, 14, 15) of all the gear stages (7, 8, 9) are mounted via roller bodies (19, 20, 21) on shafts (16, 17, 18) which are held on associated planet carriers (10, 11, 12).

3. Hand-held power tool according to Claim 1 or 2, **characterized in that** a total of three gear stages (7, 8, 9) are provided.

4. Hand-held power tool according to one of Claims 1 to 3, **characterized in that** the roller bodies (19, 20, 21) are configured as needle sleeves.

5. Hand-held power tool according to one of Claims 1 to 4, **characterized in that** the ring gear (27) of one gear stage (9), of which the planetary wheels (15) are roller-mounted, is part of a torque coupling for setting a maximum transmissible torque.

6. Hand-held power tool according to Claim 5, **characterized in that** the ring gear (27) is movable in rotation with respect to the housing (2).

7. Hand-held power tool according to one of Claims 1 to 6, **characterized in that** the planetary gear system (5) is configured to be shiftable in order to set at least two different gears.

8. Hand-held power tool according to Claim 7, **characterized in that** a shifting ring gear (23) is provided which is adjustable between a locking position and an unlocking position, wherein the shifting ring gear (23) is coupled fixedly to the housing in the locking position and is coupled to a planet carrier (11) of an adjacent stage in the unlocking position.

9. Hand-held power tool according to Claim 8, **characterized in that** the shifting ring gear (23) is coupled to a sliding switch via a spring element.

10. Hand-held power tool according to Claim 8 or 9, **characterized in that** the shifting ring gear (23) is axially adjustable.

11. Hand-held power tool according to one of Claims 8 to 10, **characterized in that** the shifting ring gear (23) is assigned to the second gear stage (8).

12. Hand-held power tool according to one of Claims 8 to 11, **characterized in that** the shifting ring gear (23) engages around a ring gear (22) of the second gear stage (8) and is adjustable axially between a locking position, in which the shifting ring gear (23) is locked onto a housing-side locking ring (24), and an unlocking position, in which the shifting ring gear (23) is connected to the ring gear (22) of the second gear stage (8) and to the planet carrier (10) of the first gear stage (7).

13. Hand-held power tool according to one of the preceding claims, **characterized in that** the second gear stage (8) has a ring gear (22), an axially adjustable shifting ring gear (23) and planetary wheels (14) which are mounted on the shafts (17) of the planet carrier (11) of the second gear stage (8) via roller bodies (20) configured as needle sleeves.

14. Hand-held power tool according to one of Claims 8 to 11, **characterized in that** the ring gear (22) of the second gear stage (8) is configured as a shifting ring gear which is adjustable between a housing-fixed locking position and an unlocking position.

15. Hand-held power tool according to one of Claims 5 to 14, **characterized in that** the torque coupling comprises a setting ring (25) and pressure springs (26), wherein the pretensioning of the pressure springs (26) is modifiable via the setting ring (25) .

## Revendications

1. Machine-outil manuelle équipée d'un engrenage planétaire (5) avec plusieurs étages de transmission (7, 8, 9), dans laquelle au moins un étage de transmission (8, 9) présente une couronne (23, 27) mobile par rapport au boîtier (2), **caractérisée en ce que** l'étage de transmission (8, 9) comprend des roues planétaires (14, 15), qui sont montées au moyen de corps de roulement (20, 21) respectivement sur un arbre (17, 18), dans laquelle les arbres (17, 18) sont maintenus sur des porte-satellites associés (11, 12).

2. Machine-outil manuelle selon la revendication 1, **caractérisée en ce que** les roues planétaires (13, 14, 15) de tous les étages de transmission (7, 8, 9) sont montées au moyen de corps de roulement (19, 20, 21) sur des arbres (16, 17, 18), qui sont maintenus sur des porte-satellites associés (10, 11, 12).

3. Machine-outil manuelle selon la revendication 1 ou 2, **caractérisée en ce qu'**il est prévu au total trois étages de transmission (7, 8, 9).

4. Machine-outil manuelle selon l'une quelconque des revendications 1 à 3, **caractérisée en ce que** les corps de roulement (19, 20, 21) sont réalisés sous forme de douilles à aiguilles.

5. Machine-outil manuelle selon l'une quelconque des revendications 1 à 4, **caractérisée en ce que** la couronne (27) d'un étage de transmission (9), dont les roues planétaires (15) sont montées sur roulement, fait partie d'un couplage de couple pour le réglage d'un couple maximal transmissible.

6. Machine-outil manuelle selon la revendication 5, **caractérisée en ce que** la couronne (27) est mobile en rotation par rapport au boîtier (2).

7. Machine-outil manuelle selon l'une quelconque des revendications 1 à 6, **caractérisée en ce que** l'engrenage planétaire (5) est commutable pour le réglage d'au moins deux rapports différents.

8. Machine-outil manuelle selon la revendication 7, **caractérisée en ce qu'**il est prévu une couronne de commutation (23), qui peut être déplacée entre une position engagée et une position non engagée, dans laquelle la couronne de commutation (23) est couplée de façon fixe par rapport au boîtier dans la position engagée et est couplée avec un porte-satellites (11) de l'étage voisin dans la position non engagée.

9. Machine-outil manuelle selon la revendication 8, **caractérisée en ce que** la couronne de commutation (23) est couplée à un coulisseau de commutation au moyen d'un élément de ressort.

10. Machine-outil manuelle selon la revendication 8 ou 9, **caractérisée en ce que** la couronne de commutation (23) est déplaçable axialement.

11. Machine-outil manuelle selon l'une quelconque des revendications 8 à 10, **caractérisée en ce que** la couronne de commutation (23) est associée au deuxième étage de transmission (8).

12. Machine-outil manuelle selon l'une quelconque des revendications 8 à 11, **caractérisée en ce que** la couronne de commutation (23) entoure une couronne (22) du deuxième étage de transmission (8) et doit être déplacée axialement entre une position engagée, dans laquelle la couronne de commutation (23) est engagée avec une bague d'engagement côté boîtier (24), et une position non engagée, dans laquelle la couronne de commutation (23) est assemblée à la couronne (22) du deuxième étage de transmission (8) et au porte-satellites (10) du premier étage de transmission (7).

13. Machine-outil manuelle selon l'une quelconque des revendications précédentes, **caractérisée en ce que** le deuxième étage de transmission (8) présente une couronne (22), une couronne de commutation (23) disposée de façon déplaçable axialement ainsi que des roues planétaires (14), qui sont montées sur les arbres (17) du porte-satellites (11) du deuxième étage de transmission (8) au moyen de corps de roulement (20) réalisés sous forme de douilles à aiguilles.

14. Machine-outil manuelle selon l'une quelconque des revendications 8 à 11, **caractérisée en ce que** la couronne (22) du deuxième étage de transmission (8) est réalisée sous forme de couronne de commutation, qui doit être déplacée entre une position engagée fixe par rapport au boîtier et une position non engagée.

15. Machine-outil manuelle selon l'une quelconque des revendications 5 à 14, **caractérisée en ce que** le couplage de couple comprend une bague de réglage (25) et des ressorts de pression (26), dans laquelle la précontrainte des ressorts de pression (26) est réglable au moyen de la bague de réglage (25).
